# EUROPEAN PATENT APPLICATION

(11) **EP 3 246 177 A1**
(43) Date of publication of application: **22.11.2017**
(21) Application number: 17171222.7
(22) Date of filing: 16.05.2017
(51) Int. Cl.: B60C 1/00, C08K 3/36, C08K 5/17, C08K 5/44

(54) **RUBBER COMPOSITION AND PNEUMATIC TIRE WITH AMINE COMPOUND**

(30) Priority: 17.05.2016 US 201615156404
(71) Applicant: The Goodyear Tire & Rubber Company, Akron, OH 44316 (US)
(72) Inventor: LECHTENBOEHMER, Annette, 9048 Ettelbruck (LU); POORTERS, Laurent Albert Robert, 9137 Schieren (LU); KAES, Christian Jean-Marie, 9184 Schrondweiler (LU)
(74) Representative: Kutsch, Bernd

(57) **Abstract**

A rubber composition is disclosed comprising at least one diene based elastomer, silica, and curatives comprising sulfur, a sulfenamide and a compound of formula I 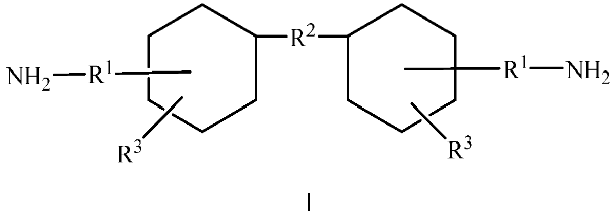 where R¹ are independently a covalent bond or one of a C1 to a C8 linear or branched alkane diyl, R² is one of a C1 to a C8 linear or branched alkane diyl, and R³ are independently hydrogen or one or a C1 to a C8 linear or branched alkyl. The rubber composition may be used in a pneumatic tire.

## Description

### Background of the Invention

Rubbery polymers are typically compounded with sulfur, accelerators, antidegradants, a filler, such as carbon black, silica or starch, and other desired rubber chemicals and are then subsequently vulcanized or cured into the form of a useful article, such as a tire or a power transmission belt. Typically, in a sulfur cure a primary amine accelerator such as a sulfonamide is used in combination with a secondary accelerator such as diphenylguanidine. In compounds highly loaded with silica, excess amine is needed to offset the effect of the acidic silica surface. There is a need for alternative amine accelerators useful in the sulfur cure of rubber compounds.

### Summary of the Invention

The present invention is directed to a rubber composition in accordance with claim 1, to a tire in accordance with claim 10 and to a method in accordance with claim 11.

Dependent claims refer to preferred embodiments of the invention.

In a preferred aspect of the invention a pneumatic tire is provided comprising at least one component, the at least one component comprising a vulcanizable rubber composition, the vulcanizable rubber composition comprising: at least one diene based elastomer; silica, preferably precipitated silica; and curatives comprising sulfur, a sulfenamide, and a compound of formula I 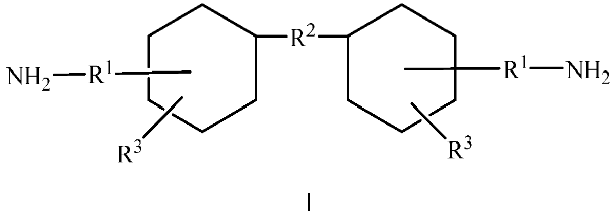 where R¹ are independently a covalent bond or a C1 to C8 linear or branched alkane diyl; R² is C1 to C8 linear or branched alkane diyl; and R³ are independently hydrogen or C1 to C8 linear or branched alkyl.

The invention is further directed to a method a rubber composition and a tire comprising the rubber composition, the method comprising the step of mixing at least one diene based elastomer, silica such as precipitated silica, and the compound of formula I.

### Description of Example Embodiments

There is disclosed a pneumatic tire comprising at least one component, the at least one component comprising a vulcanizable rubber composition, the vulcanizable rubber composition comprising:
at least one diene based elastomer;
precipitated silica; and
curatives comprising sulfur, a sulfenamide, and a compound of formula I 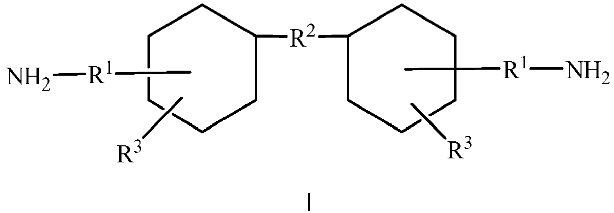 where R¹ are independently a covalent bond or a C1 to C8 linear or branched alkane diyl; R² is C1 to C8 linear or branched alkane diyl; R³ are independently hydrogen or C1 to C8 linear or branched alkyl.

The present invention is directed towards the use of a primary amine compound of formula I which can function as a curative in rubber compositions for use in tires. The rubber composition includes a compound of formula I.

In one embodiment, the rubber composition includes from 0.1 to 10 phr of the compound of formula I. In one embodiment, the rubber composition includes from 1 to 5 phr of the compound of formula I. In one embodiment, the rubber composition includes from 2 to 4 phr of the compound of formula I.

In one embodiment, in formula I both R¹ are a divalent bond, R² is methylene, both R³ are hydrogen, both primary amine groups are substituted on the respective cyclohexane ring para to the R² methylene, and the compound of formula I is 4,4'-diaminodicyclohexylmethane.

In one embodiment, the compound of formula I is 4,4'-diaminodicylcohexylmethane, available commercially as Dicykan from BASF.

The rubber composition includes at least one diene based rubber. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include solution polymerized polymers (SBR, PBR, IBR and SIBR) funtionalized with groups including but not limited to alkoxy-silyl groups, amine groups, and thioester and thiol groups. Also useful are tin-coupled polymers. The preferred rubber or elastomers are natural rubber, synthetic polyisoprene, polybutadiene and SBR.

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/ butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

In one embodiment, cis 1,4-polybutadiene rubber (BR) is used. Suitable polybutadiene rubbers may be prepared, for example, by organic solution polymerization of 1,3-butadiene. The BR may be conveniently characterized, for example, by having at least a 90 percent cis 1,4-content and a glass transition temperature Tg in a range of from -95 to -105°C. Suitable polybutadiene rubbers are available commercially, such as Budene® 1207 from Goodyear and the like.

In one embodiment, a synthetic or natural polyisoprene rubber may be used.

In one embodiment, a metal coupled elastomer may be used, such as tin elastomers. Such elastomers are particularly suitable for use with the compound of formula I, as such coupled elastomers have increased potential for generating radicals during mixing.

A reference to glass transition temperature, or Tg, of an elastomer or elastomer composition, where referred to herein, represents the glass transition temperature(s) of the respective elastomer or elastomer composition in its uncured state or possibly a cured state in a case of an elastomer composition. A Tg is determined as a peak midpoint by a differential scanning calorimeter (DSC) at a temperature rate of increase of 10ºC per minute.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition includes from 10 to 150 phr of silica, preferably 30 to 120 phr of silica. The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Various commercially available silicas may be used, such as, only for example herein, and without limitation, silicas commercially available from PPG Industries under the Hi-Sil trademark with designations 210 and 243; silicas available from Rhodia, with, for example, designations of Z1165MP and Z165GR; and silicas available from Degussa AG with, for example, designations VN2 and VN3.

Commonly employed carbon blacks can be used as a conventional filler in an amount ranging from 10 to 100 phr. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including particulate fillers including ultra high molecular weight polyethylene (UHMWPE), crosslinked particulate polymer gels including those disclosed in US-A-6,242,534, US-A-6,207,757, US-A-6,133,364, US-A-6,372,857, US-A-5,395,891 or US-A-6,127,488, and plasticized starch composite filler including that disclosed in US-A-5,672,639. Such other fillers may be used in an amount ranging from 1 to 30 phr.

In one embodiment the rubber composition may contain a conventional sulfur containing organosilicon compound. Examples of suitable sulfur containing organosilicon compounds are of the formula:

Z-Alk-Sn-Alk-Z II

in which Z is selected from the group consisting of 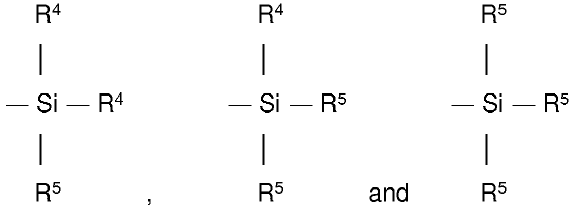 where R⁴ is an alkyl group of 1 to 4 carbon atoms, cyclohexyl or phenyl; R⁵ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula II, Z may be 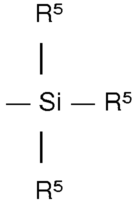 where R⁵ is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-A-6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Performance Materials.

In another embodiment, suitable sulfur containing organosilicon compounds include those disclosed in US-A-2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In the rubber composition, a combination of a primary and a secondary accelerator is used. The primary accelerator(s) is a sulfenamide and may be used in total amounts ranging from 0.5 to 4, alternatively 0.8 to 1.5, phr. The secondary accelerator of formula I is used in amounts as previously given. Combinations of these accelerators may produce a synergistic effect on the final properties and are somewhat better than those produced by use of either accelerator alone. Suitable sulfenamides include those as are commonly known in the art, such as N-cyclohexyl-2-benzothiazolesulfenamide (CBS), N-tert-butyl-2-benzothiazolesulfenamide (TBBS), and the like.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road, or truck tire. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following examples.

### Example 1

In this example, the effect of compounding of a rubber compound with an amine according to formula I is illustrated.

4,4'-diaminodicyclohexylmethane (as Dicykan from BASF) was mixed with polymer, silica, oil, and other compounds in laboratory Brabender® mixer equipped with Banbury® rotors. Samples were mixed with additives in a multistage mix procedure as shown in Table 1, with all amounts given in parts by weight, per 100 parts by weight of elastomer (phr). Parallel control compounds were mixed using diphenylguanidine instead of the compound of formula I.

The basic rubber composition is reported in the following Table 1 with parts and percentages, where appropriate, by weight unless otherwise indicated. For example, various amounts of ingredients may be reported in terms of parts by weight per 100 parts by weight rubber (phr).

Table 2 reports cure behavior and various physical properties of control rubber Samples 1-3 and experimental rubber Samples 4-8. The rubber samples were sulfur cured to T90 at 150°C.

As seen in Table 2, samples made using 4,4'-diaminodicyclohexylmethane show favorable physical properties (especially modulus, elongation and rebound) compared to samples made with diphenylguanidine.

**Table 1**

| Material | Parts by weight (phr) |
|---|---|
| Non-productive mixing | |
| Styrene/butadiene rubber¹ | 55 |
| Polybutadiene² | 45 |
| Precipitated silica | 125 |
| Silane coupling agent³ | 7.8 |
| Fatty acids⁴ | 5 |
| Rubber processing oil | 35 |
| Waxes | 1.5 |
| Traction resin | 15 |

| Non-productive second stage | |
|---|---|
| Productive mixing (subsequent to non-productive mixing) | |
| Sulfur | 1.2 |
| Primary Accelerator⁵ | 1.8 |
| Secondary Accelerator⁶ | variable as per Table 2 |
| Antioxidant⁷ | 0.5 |
| Zinc oxide | 2.5 |
| Silane coupling agent | 2 |

| | |
|---|---|
| ¹Styrene/butadiene rubber functionalized with alkoxysilyl and thiol groups, as Sprintan SLR 4602 from Trinseo ²Budene 1223 from The Goodyear Tire & Rubber Company ³bis (triethoxysilylpropyl) disulfide ⁴Fatty acid comprised of stearic acid, palmitic acid and oleic acid. ⁵N-cyclohexyl-2-benzothiazolesulfenamide ⁶diphenylguanidine or 4,4'-diaminodicyclohexylmethane ⁷p-phenylene diamine based antioxidant. | |

**Table 2**

| Sample No. | 1 | 2 | 3 | 4 | 5 | 6 | 7 | 8 |
|---|---|---|---|---|---|---|---|---|
| | | | | | | | | |
| Secondary Accelerator Amount | | | | | | | | |
| Diphenylguanidine (phr) | 3 | 1.5 | 0 | 0 | 0 | 0 | 0 | 0 |
| 4,4'-diaminodicyclohexylmethane (phr) | 0 | 0 | 0 | 1.3 | 2 | 2.6 | 3.3 | 4 |

| Cure Properties¹ | | | | | | | | |
|---|---|---|---|---|---|---|---|---|
| Minimum S' (dN·m) | 2.3 | 2.8 | 2.9 | 3.3 | 3.1 | 2.8 | 2.8 | 3.3 |
| Maximum S' (dN·m) | 13.8 | 14.7 | 13.8 | 14.3 | 14.1 | 15.7 | 15.8 | 14.9 |
| T25 (min) | 5.3 | 9.6 | 12.0 | 10.3 | 7.6 | 4.5 | 3.0 | 9.4 |
| T50 (min) | 6.5 | 12.5 | 22.9 | 14.6 | 10.7 | 6.1 | 4.3 | 12.9 |
| T80 (min) | 8.8 | 16.6 | 42.2 | 21.5 | 16.0 | 9.5 | 7.9 | 18.4 |
| T90 (min) | 11.4 | 21.0 | 59.9 | 29.7 | 22.5 | 14.4 | 14.0 | 24.5 |

| Physical Properties² | | | | | | | | |
|---|---|---|---|---|---|---|---|---|
| Elongation at Break (%) | 471.0 | 602.8 | 627.9 | 583.0 | 631.2 | 531.1 | 556.6 | 538.7 |
| Modulus Ratio (-) | 5.8 | 4.4 | 3.6 | 3.9 | 3.9 | 4.4 | 4.4 | 4.0 |
| 300% Modulus (MPa) | 7.9 | 5.2 | 4.1 | 4.6 | 4.6 | 5.8 | 6.1 | 5.4 |
| Rebound Value (%) | 39.3 | 33.4 | 33.0 | 35.2 | 36.4 | 36.8 | 36.2 | 34.1 |
| Shore A (-) | 55.3 | 57.1 | 55.2 | 58.6 | 56.3 | 60.5 | 60.8 | 61.3 |
| Tensile Strength (MPa) | 13.9 | 13.4 | 10.8 | 11.0 | 12.0 | 11.9 | 13.1 | 11.1 |

| | | | | | | | | |
|---|---|---|---|---|---|---|---|---|
| ¹ Cure properties were determined using a Monsanto oscillating disc rheometer (MDR) which was operated at a temperature of 150ºC and at a frequency of 11 hertz. A description of oscillating disc rheometers can be found in The Vanderbilt Rubber Handbook edited by Robert O. Ohm (Norwalk, Conn., R. T. Vanderbilt Company, Inc., 1990), Pages 554 through 557. The use of this cure meter and standardized values read from the curve are specified in ASTM D-2084. A typical cure curve obtained on an oscillating disc rheometer is shown on Page 555 of the 1990 edition of The Vanderbilt Rubber Handbook. ²Tensile data were measured according to Automated Testing System instrument by the Instron Corporation. Such instrument may determine ultimate tensile, ultimate elongation, moduli, etc. Data reported in the Table is generated by running the ring tensile test station which is an Instron 4201 load frame (ASTM D412). Hardness was measured following ASTM D2240 type A. Rebound was measured as Zwick Rebound following ASTM D105. | | | | | | | | |

## Claims

1. A rubber composition comprising at least one diene based elastomer, silica, and curatives comprising sulfur, a sulfonamide and a compound of formula I 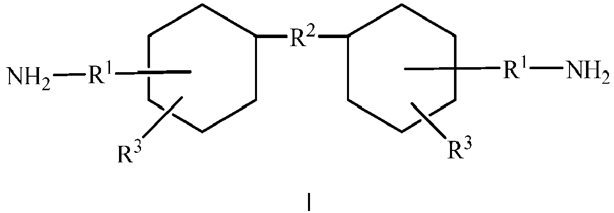 where R¹ are independently a covalent bond or one of a C1 to a C8 linear or branched alkane diyl, R² is one of a C1 to a C8 linear or branched alkane diyl, and R³ are independently hydrogen or one or a C1 to a C8 linear or branched alkyl.

2. The rubber composition of claim 1, wherein in formula I, R¹ is a divalent bond, R² is methylene, and R³ is hydrogen or the compound of formula I is 4,4'-diaminodicyclohexylmethane.

3. The rubber composition of claim 1 or 2, wherein the amount of the compound of formula I ranges from 0.1 to 10 phr.

4. The rubber composition of claim 3 wherein the amount of the compound of formula I ranges from 1 to 5 phr or from 2 to 4 phr.

5. The rubber composition of at least one of the previous claims, wherein the sulfenamide is selected from the group consisting of N-cyclohexyl-2-benzothiazolesulfenamide and N-tert-butyl-2-benzothiazolesulfenamide.

6. The rubber composition of at least one of the previous claims, wherein the amount of silica ranges from 10 to 150 phr.

7. The rubber composition of at least one of the previous claims, wherein the at least one diene elastomer is selected from the group consisting of natural rubber, synthetic polyisoprene, polybutadiene and styrene-butadiene rubber.

8. The rubber composition of at least one of the previous claims, wherein the at least one diene elastomer is a tin-coupled elastomer.

9. The rubber composition of at least one of the previous claims, wherein the at least one diene elastomer is a functionalized elastomer.

10. A pneumatic tire having at least one component comprising the rubber composition in accordance with at least one of the previous claims.

11. A method of preparing a rubber composition, the method comprising mixing the rubber composition in accordance with at least one of the claims 1 to 7.
